# EUROPEAN PATENT SPECIFICATION

(11) **EP 3 821 271 B1**
(45) Date of publication and mention of the grant of the patent: **28.08.2024**
(21) Application number: 19880959.2
(22) Date of filing: 08.07.2019
(51) Int. Cl.: G01S 7/41, G01S 13/04, G01S 13/34, G01S 13/88, G01S 13/89

(54) **SYSTEM AND METHOD FOR PRESENCE DETECTION USING AN FMCW RADAR**
SYSTEM UND VERFAHREN ZUR ANWESENHEITSDETEKTION UNTER VERWENDUNG EINES FMCW-RADARS
SYSTÈME ET PROCÉDÉ DE DÉTECTION DE PRÉSENCE À L'AIDE D'UN RADAR FMCW

(30) Priority: 13.07.2018 US 201862697503 P
(43) Date of publication of application: 19.05.2021
(73) Proprietor: Carrier Corporation, Palm Beach Gardens, FL 33418 (US)
(72) Inventor: XIONG, Ziyou, East Hartford, Connecticut 06108 (US); ZACCHIO, Joseph, East Hartford, Connecticut 06108 (US); TIWARI, Ankit, East Hartford, Connecticut 06108 (US); AGRAWAL, Piyush, Cork (IE)
(74) Representative: Dehns
(86) International application number: PCT/US2019/040768
(87) International publication number: WO 2020/101759

(56) References cited:
- US-A1- 2008 100 498
- US-A1- 2011 025 547
- US-A1- 2017 328 997

## Description

### BACKGROUND

The embodiments herein relate to the field of presence detection, and specifically to a method and apparatus for detecting presence of objects using radar

Conventional human presence sensing have difficulty detecting humans when humans are not in motion but are indeed present in the scene as these sensors detect large motions to infer indirectly whether an area is occupied or not.

US 2008/100498 A1 discloses a system and method for intrusion detection using a time domain radar array. US 2011/025547 A1 discloses a radar system that differentiates between a live person, an animal or an object as the target type. US 2017/328997 A1 discloses a radar that identifies a target as a human.

### BRIEF SUMMARY

According to an embodiment, a method of detecting a presence of an object is provided. The method including: transmitting commissioning frequency-modulated continuous wave (FMCW) radar signals throughout an area using a radar transceiver of a FMCW radar system; mapping a commissioning image of the area using the commissioning FMCW radar signals; transmitting current FMCW radar signals throughout the area using the radar transceiver; mapping a current image of the area using the current FMCW radar signals; detecting a difference between the current image and the commissioning image; identifying an object as the difference between the current image and the commissioning image; and determining an identity of the object.

Determining an identity of the object further includes: identifying whether the object is an animate object or an inanimate object.

Identifying whether the object is an animate object or an inanimate object further includes: determining whether the object is breathing.

Determining whether the object is breathing further includes: detecting movements of the object using the current FMCW radar signals; determining the movements are periodic having a first frequency; and determining the first frequency is within a range of respiratory rates.

In addition to one or more of the features described herein, or as an alternative, further embodiments may include that determining an identity of the object further include: determining the first frequency is within a range of human respiratory rates; and identifying the object as a human when the first frequency is within the range of human respiratory rates.

In addition to one or more of the features described herein, or as an alternative, further embodiments may include that determining an identity of the object further include: determining the first frequency is within a range of animal respiratory rates; and identifying the object as an animal when the first frequency is within the range of animal respiratory rates.

In addition to one or more of the features described herein, or as an alternative, further embodiments may include that identifying whether the object is an animate object or an inanimate object further includes: detecting movements of the object using the current FMCW radar signals; and identifying a gait of the object; and determining the object is animate in response to the gait.

In addition to one or more of the features described herein, or as an alternative, further embodiments may include determining a number of legs of the object using the current FMCW radar signals.

In addition to one or more of the features described herein, or as an alternative, further embodiments may include identifying the object as a human when the number of legs is two.

In addition to one or more of the features described herein, or as an alternative, further embodiments may include identifying the object as an animal when the number of legs is four.

According to another embodiment, a frequency-modulated continuous wave (FMCW) radar system is provided. The FMCW radar system including: a radar transceiver configured to transmit and receive frequency-modulated continuous wave (FMCW) radar signals; a processor; a memory including computer-executable instructions that, when executed by the processor, cause the processor to perform operations, the operations including: transmitting commissioning FMCW radar signals throughout an area using the radar transceiver; mapping a commissioning image of the area using the commissioning FMCW radar signals; transmitting current FMCW radar signals throughout the area using the radar transceiver; mapping a current image of the area using the current FMCW radar signals; detecting a difference between the current image and the commissioning image; identifying an object as the difference between the current image and the commissioning image; and determining an identity of the object.

Determining an identity of the object further includes: identifying whether the object is an animate object or an inanimate object.

Identifying whether the object is an animate object or an inanimate object further includes: determining whether the object is breathing.

Determining whether the object is breathing further includes: detecting movements of the object using the current FMCW radar signals; determining the movements are periodic having a first frequency; and determining the first frequency is within a range of respiratory rates.

In addition to one or more of the features described herein, or as an alternative, further embodiments may include that determining an identity of the object further include: determining the first frequency is within a range of human respiratory rates; and identifying the object as a human when the first frequency is within the range of human respiratory rates.

In addition to one or more of the features described herein, or as an alternative, further embodiments may include that determining an identity of the object further include: determining the first frequency is within a range of animal respiratory rates; and identifying the object as an animal when the first frequency is within the range of animal respiratory rates.

In addition to one or more of the features described herein, or as an alternative, further embodiments may include that identifying whether the object is an animate object or an inanimate object further includes: detecting movements of the object using the current FMCW radar signals; and identifying a gait of the object; and determining the object is animate in response to the gait.

In addition to one or more of the features described herein, or as an alternative, further embodiments may include that the operations further include: determining a number of legs of the object using the current FMCW radar signals.

In addition to one or more of the features described herein, or as an alternative, further embodiments may include that the operations further include: identifying the object as a human when the number of legs is two.

In addition to one or more of the features described herein, or as an alternative, further embodiments may include that the operations further include: identifying the object as an animal when the number of legs is four.

Technical effects of embodiments of the present disclosure include utilizing a frequency-modulated continuous wave (FMCW) radar system to detect changes between objects in the room in order to determine human presence.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an frequency-modulated continuous wave (FMCW) radar system, in accordance with an embodiment of the present disclosure; and
FIG. 2 is a flow chart of a method detecting a presence of an object, in accordance with an embodiment of the disclosure.

### DETAILED DESCRIPTION

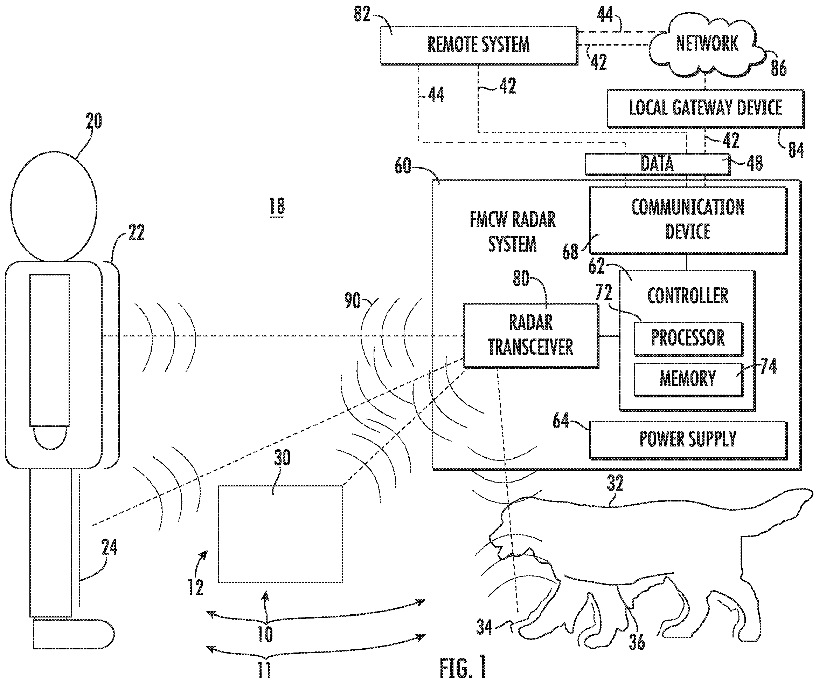

FIG. 1 illustrates a block diagram of a frequency-modulated continuous wave (FMCW) radar system 60 configured to detect objects 10 and differentiate humans 20 from other objects 10 using FMCW radar signals 90. It should be appreciated that, although particular systems are separately defined in the schematic block diagram of FIG. 1, each or any of the systems may be otherwise combined or separated via hardware and/or software. The FMCW radar system 60 includes a controller 62, a radar transceiver 80 in communication with the controller 62, a communication device 68 in communication with the controller 62, and a power supply 64 configured to power the FMCW radar system 60. The radar transceiver 60 is configured to transmit and receive FMCW radar signals 90. The radar transceiver 60 may include a separate transmitting device configured to transmit FMCW radar signals 90 and a separate receiving device configured to receive FMCW radar signals 90. FMCW radar signals 90 have continuous transmission power but an operating frequency that may be modulated. Advantageously, FMCW radar signals 90 may be utilized to detect distance with increased accuracy. For example, the operating frequency of a transmitted FMCW radar signal 90 may be varied over time at fixed rate and thus the frequency difference between transmitted FMCW radar signal 90 and the received FMCW radar signal 90 helps to determine the distance between the radar transceiver 80 and an object 10. Advantageously, FMCW radar signals 90 may be utilized to detect minute changes in distance, and thus may be used to detect breathing by sensing a change in position of the chest 22 of a human 20.

As shown in FIG. 1, the FMCW radar system 60 generally includes a controller 62 to control operation of the FMCW radar system 60. The controller 62 may include a processor 72 and an associated memory 74 comprising computer-executable instructions that, when executed by the processor 72, cause the processor 72 to perform various operations. The processor 72 may be but is not limited to a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 74 may be a storage device, such as, for example, a random access memory (RAM), read only memory (ROM), or other electronic, optical, magnetic or any other computer readable medium.

The power supply 64 of the FMCW radar system 60 is configured to store and/or supply electrical power to the FMCW radar system 60. In one embodiment, the power supply 64 may be an electrical outlet that FMCW radar system 60 plugs into. In another embodiment, the power supply 64 may be a self-contained unit within the FMCW radar system 60 configured to store and/or generate electricity to power the FMCW radar system 60. The power supply 64 may include an energy storage system, such as, for example, a battery system, capacitor, or other energy storage system known to one of skill in the art. The power supply 64 may also generate electrical power for the FMCW radar system 60 using an energy harvesting system from power sources including but not limited to solar power, thermal energy, wind energy, kinetic energy, and salinity gradients. The power supply 64 may also include an energy generation or electricity harvesting system, such as, for example synchronous generator, induction generator, or other type of electrical generator known to one of skill in the art.

The FMCW radar system 60 includes a communication module 68 configured to allow the controller 62 of the FMCW radar system 60 to communicate with a remote system 82 through at least one of short-range wireless protocols 42 and long-range wireless protocols 44. Short-range wireless protocols 42 may include but are not limited to Bluetooth, Wi-Fi, HaLow (801.11ah), Wireless M-Bus, zWave, Zigbee. Long-range wireless protocol 44 may include but are not limited to cellular, LTE (NB-IoT, CAT M1), LoRa, Ingenu, SigFox, and Satellite.

The communication module 68 may be configured to communicate directly with the remote system 82 using short-range wireless protocols 42. Using short-range wireless protocols 42, the communication module 68 may be configured to transmit the data 48 to a local gateway device 94 (e.g., Wire-less Access Protocol (WAP) device) and the local gateway device 94 is configured to transmit the data 48 to a remote system 82 through a network 86 via either short-range wireless protocols 42 or long-range wireless protocol 44. The communication module 68 may be configured to communicate directly with the remote system 82 using long-range wireless protocols 44. The data 48 being transferred to the remote system 82 may include a command configured to control operation or suggest an adjustment to operation of the remote system 82.

The remote system 82 may be a building system, such as, for example, an HVAC system, an elevator system, fire alarm system, a security system, a video camera system, a light, lock, a door lock or any other building system known to one of skill in the art. In an embodiment, the remote system 82 is a lock and a locking mechanism of the lock is adjusted in response to the data 48. In another embodiment, the remote system 82 is an HVAC system and a compressor, fan, or furnace of the HVAC system is adjusted in response to the data 48. The remote system 82 generally includes a processor that controls the operation of the remote system 82 and an associated memory comprising computer-executable instructions that, when executed by the processor, cause the processor to perform various operations. The processor may be but is not limited to a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device, such as, for example, a random access memory (RAM), read only memory (ROM), or other electronic, optical, magnetic or any other computer readable medium.

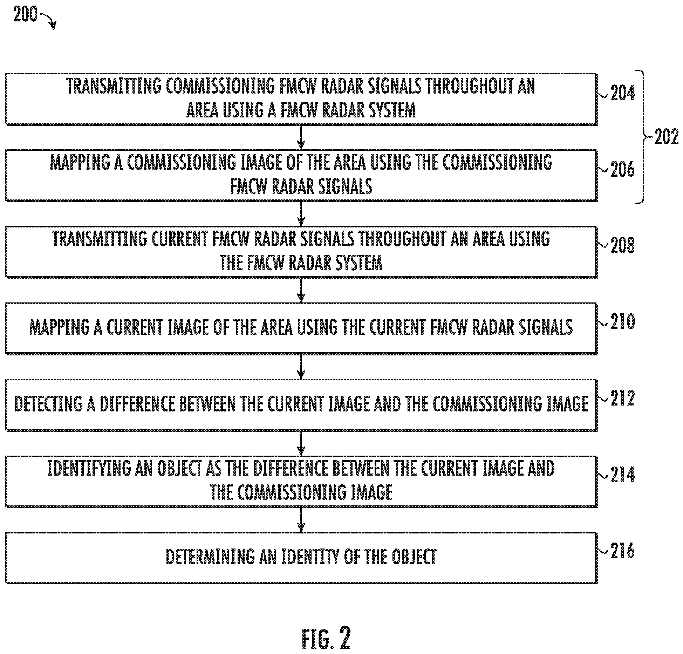

Referring now to FIGs. 1 and 2. FIG. 2 shows a flow chart of a method 200 of detecting a presence of an object 10. The object 10 may be an animate object 11 or an inanimate object 12. At block 204 and 206, the FMCW radar system 60 performs a commissioning process 202. At block 204, commissioning FMCW radar signals 90 are transmitted throughout an area 18 using a FMCW radar system 60. The area 18 may be a room of a building. At block 206, a commissioning image of the area 18 is mapped using the commissioning FMCW radar signals 90. The commissioning image may depict where all the objects 10 are located in the area 18. The FMCW radar system 60 may use a fast Fourier transform to analyze the FMCW radar signals 90 and determine the distance between all the objects 10 located in the area 18 to generate the commissioning image of the area 18.

At block 208, current FMCW radar signals 90 are transmitted throughout an area using the FMCW radar system 60. At block 210, a current image of the area 18 is mapped using the current FMCW radar signals 90. The FMCW radar system 60 may use a fast Fourier transform to analyze the FMCW radar signals 90 and determine the distance between all the objects 10 located in the area 18 to generate the current image of the area 18. At block 212, a difference between the current image and the commissioning image is detected by comparing the current image and the commissioning image. Advantageously, the difference between the current image and the commissioning image allows detecting a change in the area 18, such as the introduction of an object 10 into the area 18, without detecting motion directly. At block 214, an object 10 is identified as the difference between the current image and the commissioning image.

At block 216, an identity of the object 10 is determined. In a few examples, the identity of the object 10 may be an animate object 11, inanimate object 12, a human 20, or an animal 32. The method 200 determines the object 10 to be an animate object 11 or an inanimate object 12 by determining whether the object 10 is breathing. If the object 10 is breathing, the object 10 is an animate object 11 whereas if the object 10 is not breathing the object 10 is an inanimate object 12. The method 200 determines that the object 10 is breathing by detecting movements of the object 10 that are higher than a signal threshold under which the scene is regarded as static using the current FMCW radar signals 90; determining the movements are periodic having a first frequency; and determining the first frequency is within the range of respiratory rates. For example, the current FMCW radar signals 90 may detect that a chest 22 of a human 20 is moving in and out by showing a period change in the location of the chest 22 of the human 20. In another example, the current FMCW radar signals 90 may detect that a chest 36 of an animal 32 is moving in and out by showing a period change in the location of the chest 36 of the animal 32. Further, the animate object 11 may be identified to be a human 20 if the first frequency of the breathing is is within the range of human respiratory rates. Alternatively, the animate object 11 may be identified to be an animal 32 if the first frequency of the breathing is within the range of animal respiratory rates.

In another embodiment, the method 200 may determine that the object 10 to be an animate object 11 or an inanimate object 12 by determining whether the object 10 is moving. The FMCW system 60 can determine whether the object 10 is moving and animate by detecting movements of the object 10 using the current FMCW radar signals 90 and identifying a gait of the object 10. The FMCW system 60 can identify the animate object by determining a number of legs of the animate object 10 using the current FMCW radar signals 90. For example, an animate object 11 will show a change in position of the legs of the animate object 11 when the animate object 11 is walking. For example, the current FMCW radar signals 90 may detect that legs 24 of a human 20 moving by showing a change in the location of the legs 24 of the human 20. In another example, the current FMCW radar signals 90 may detect that legs 34 of an animal 32 moving by showing a change in the location of the legs 34 of the animal 32. The animate object 11 may be determined to be a human 20 when the number of legs detected is two. The animate object 11 may be determined to be an animal 32 when the number of legs is four.

The legs 24, 34 may be detected as follows: when an FMCW radar system 60 operates using a high sweeping bandwidth (e.g., >1GHz), the range resolution of the FMCW radar system 60 allows for limbs of humans 20 or animals 32 to be separated in the FMCW signal's frequency domain. These limbs appear as motion tracks with associated periodicity. The motion tracks are detected and tracked by a multi-object tracking algorithm to decide the number of legs 24, 34 and their respective periodicity.

The method 200 may further include transmitting data 48 to the remote system 82 in response to an object 10 detected. For example, if a human 20 is detected in the area 18, the HVAC system may be adjusted accordingly. In another example, if a human 20 is detected in a restricted access high-security area (e.g., banks, prisons, nuclear sites, military bases, research facilities, etc.) then an alarm may be activated indicating that a human is present in the restricted access high-security area.

While the above description has described the flow process of FIG. 2 in a particular order, it should be appreciated that unless otherwise specifically required in the attached claims that the ordering of the steps may be varied.

## Claims

1. A method (200) of detecting a presence of an object (10, 11, 12, 20), the method comprising:
transmitting (204) commissioning radar signals (90) throughout an area (18) using a radar transceiver (80) of a radar system (60);
mapping (206) a commissioning image of the area (18) using the commissioning radar signals (90);
transmitting (208) current radar signals throughout the area (18) using the radar transceiver (80);
mapping (210) a current image of the area (18) using the current radar signals;
detecting (212) a difference between the current image and the commissioning image;
identifying (214) an object (10, 11, 12, 20) as the difference between the current image and the commissioning image; and
determining (216) an identity of the object (10, 11, 12, 20);
**characterised in that** the commissioning (90) and current radar signals are frequency-modulated continuous wave radar signals, and
the radar system (60) is a frequency-modulated continuous wave radar system; and
**in that** determining (216) an identity of the object (10, 11, 12, 20) comprises identifying whether the object is an animate object or an inanimate object;
wherein identifying whether the object (10, 11, 12, 20) is an animate object or an inanimate object comprises determining whether the object is breathing; and
wherein determining whether the object is breathing comprises detecting movements of the object using the current frequency-modulated continuous wave radar signals;
determining the movements are periodic having a first frequency; and
determining the first frequency is within a range of respiratory rates.

2. The method (200) of claim 1, wherein determining (216) an identity of the object (10, 11, 12, 20) further comprises:
determining the first frequency is within a range of human respiratory rates; and
identifying the object as a human when the first frequency is within the range of human respiratory rates.

3. The method (200) of claim 1 or 2, wherein determining (216) an identity of the object (10, 11, 12, 20) further comprises:
determining the first frequency is within a range of animal respiratory rates; and
identifying the object as animal when the first frequency is within the range of animal respiratory rates.

4. The method (200) of any preceding claim, wherein identifying whether the object (10, 11, 12, 20) is an animate object or an inanimate object further comprises:
detecting movements of the object using the current frequency-modulated continuous wave radar signals; and
identifying a gait of the object; and
determining the object is animate in response to the gait.

5. The method (200) of claim 4, further comprising:
determining a number of legs of the object (10, 11, 12, 20) using the current frequency-modulated continuous wave radar signals; and
preferably further comprising:
identifying the object as a human when the number of legs is two and/or identifying the object as an animal when the number of legs is four.

6. A radar system (60) comprising:
a radar transceiver (80);
a processor (72);
a memory (74) comprising computer-executable instructions that, when executed by the processor, cause the processor to perform operations, the operations comprising:
transmitting (204) commissioning radar signals (90) throughout an area (18) using the radar transceiver (80);
mapping (206) a commissioning image of the area (18) using the commissioning radar signals (90);
transmitting (208) current radar signals throughout the area (18) using the radar transceiver (80);
mapping (210) a current image of the area (18) using the current radar signals;
detecting (212) a difference between the current image and the commissioning image;
identifying (214) an object (10, 11, 12, 20) as the difference between the current image and the commissioning image; and
determining (216) an identity of the object (10, 11, 12, 20);
**characterised in that** the radar system (60) is a frequency-modulated continuous wave radar system, the commissioning (90) and current radar signals are frequency-modulated continuous wave radar signals, and the radar transceiver is configured to transmit and receive frequency-modulated continuous wave radar signals; and
**in that** determining (216) an identity of the object (10, 11, 12, 20) comprises identifying whether the object is an animate object or an inanimate object;
wherein identifying whether the object (10, 11, 12, 20) is an animate object or an inanimate object comprises determining whether the object is breathing; and
wherein determining whether the object is breathing comprises detecting movements of the object using the current frequency-modulated continuous wave radar signals;
determining the movements are periodic having a first frequency; and
determining the first frequency is within a range of respiratory rates.

7. The radar system (60) of claim 6, wherein determining an identity of the object (10, 11, 12, 20) further comprises:
determining the first frequency is within a
range of human respiratory rates; and
identifying the object as a human when the first frequency is within the range of human respiratory rates.

8. The radar system (60) of claim 6 or 7, wherein determining an identity of the object (10, 11, 12, 20) further comprises:
determining the first frequency is within a
range of animal respiratory rates; and
identifying the object as an animal when the first frequency is within the range of animal respiratory rates.

9. The radar system (60) of any or claims 6 to 8, wherein identifying whether the object (10, 11, 12, 20) is an animate object or an inanimate object further comprises:
detecting movements of the object using the current frequency-modulated continuous wave radar signals; and
identifying a gait of the object; and
determining the object is animate in response to the gait.

10. The radar system (60) of claim 9, wherein the operations further comprise:
determining a number of legs of the object (10, 11, 12, 20) using the current frequency-modulated continuous wave radar signals.

11. The radar system (60) of claim 10, wherein the operations further comprise:
identifying the object as a human when the number of legs is two.

12. The radar system (60) of claim 10 or 11, wherein the operations further comprise:
identifying the object as an animal when the number of legs is four.

## Patentansprüche

1. Verfahren (200) zum Detektieren einer Anwesenheit eines Objekts (10, 11, 12, 20), wobei das Verfahren Folgendes umfasst:
Übertragen (204) von Inbetriebnahmeradarsignalen (90) durch ein Gebiet (18) unter Verwendung eines Radarsendeempfängers (80) eines Radarsystems (60);
Kartieren (206) eines Inbetriebnahmebilds des Gebiets (18) unter Verwendung der Inbetriebnahmeradarsignale (90);
Übertragen (208) gegenwärtiger Radarsignale durch das Gebiet (18) unter Verwendung des Radarsendeempfängers (80);
Kartieren (210) eines gegenwärtigen Bilds des Gebiets (18) unter Verwendung der gegenwärtigen Radarsignale;
Detektieren (212) eines Unterschieds zwischen dem gegenwärtigen Bild und dem Inbetriebnahmebild;
Identifizieren (214) eines Objekts (10, 11, 12, 20) als den Unterschied zwischen dem gegenwärtigen Bild und dem Inbetriebnahmebild; und
Bestimmen (216) einer Identität des Objekts (10, 11, 12, 20);
**dadurch gekennzeichnet, dass** die Inbetriebnahme- (90) und die gegenwärtigen Radarsignale frequenzmodulierte Dauerstrichradarsignale sind und das Radarsystem (60) ein frequenzmoduliertes Dauerstrichradarsystem ist; und
dadurch, dass das Bestimmen (216) einer Identität des Objekts (10, 11, 12, 20) Identifizieren umfasst, ob das Objekt ein belebtes Objekt oder ein unbelebtes Objekt ist;
wobei das Identifizieren, ob das Objekt (10, 11, 12, 20) ein belebtes Objekt oder ein unbelebtes Objekt ist, Bestimmen umfasst, ob das Objekt atmet; und
wobei das Bestimmen, ob das Objekt atmet, Folgendes umfasst:
Detektieren von Bewegungen des Objekts unter Verwendung der gegenwärtigen frequenzmodulierten Dauerstrichradarsignale;
Bestimmen, dass die Bewegungen periodisch sind und eine erste Frequenz aufweisen; und
Bestimmen, dass die erste Frequenz innerhalb eines Bereichs von Atemfrequenzen liegt.

2. Verfahren (200) nach Anspruch 1, wobei das Bestimmen (216) einer Identität des Objekts (10, 11, 12, 20) ferner Folgendes umfasst:
Bestimmen, dass die erste Frequenz innerhalb eines Bereichs menschlicher Atemfrequenzen liegt; und
Identifizieren des Objekts als einen Menschen, wenn die erste Frequenz innerhalb des Bereichs menschlicher Atemfrequenzen liegt.

3. Verfahren (200) nach Anspruch 1 oder 2, wobei das Bestimmen (216) einer Identität des Objekts (10, 11, 12, 20) ferner Folgendes umfasst:
Bestimmen, dass die erste Frequenz innerhalb eines Bereichs tierischer Atemfrequenzen liegt; und
Identifizieren des Objekts als Tier, wenn die erste Frequenz innerhalb des Bereichs tierischer Atemfrequenzen liegt.

4. Verfahren (200) nach einem der vorhergehenden Ansprüche, wobei das Identifizieren, ob das Objekt (10, 11, 12, 20) ein belebtes Objekt oder ein unbelebtes Objekt ist, ferner Folgendes umfasst:
Detektieren von Bewegungen des Objekts unter Verwendung der gegenwärtigen frequenzmodulierten Dauerstrichradarsignale; und
Identifizieren eines Gangbilds des Objekts; und
Bestimmen, dass das Objekt belebt ist, als Reaktion auf das Gangbild.

5. Verfahren (200) nach Anspruch 4, ferner umfassend:
Bestimmen einer Anzahl von Beinen des Objekts (10, 11, 12, 20) unter Verwendung der gegenwärtigen frequenzmodulierten Dauerstrichradarsignale; und
vorzugsweise ferner umfassend:
Identifizieren des Objekts als einen Menschen, wenn die Anzahl von Beinen zwei beträgt, und/oder Identifizieren des Objekts als ein Tier, wenn die Anzahl von Beinen vier beträgt.

6. Radarsystem (60), umfassend:
einen Radarsendeempfänger (80);
einen Prozessor (72);
einen Speicher (74), der computerausführbare Anweisungen umfasst, die bei Ausführung durch den Prozessor den Prozessor dazu veranlassen, Vorgänge durchzuführen, wobei die Vorgänge Folgendes umfassen:
Übertragen (204) von Inbetriebnahmeradarsignalen (90) durch ein Gebiet (18) unter Verwendung des Radarsendeempfängers (80);
Kartieren (206) eines Inbetriebnahmebilds des Gebiets (18) unter Verwendung der Inbetriebnahmeradarsignale (90);
Übertragen (208) gegenwärtiger Radarsignale durch das Gebiet (18) unter Verwendung des Radarsendeempfängers (80);
Kartieren (210) eines gegenwärtigen Bilds des Gebiets (18) unter Verwendung der gegenwärtigen Radarsignale;
Detektieren (212) eines Unterschieds zwischen dem gegenwärtigen Bild und dem Inbetriebnahmebild;
Identifizieren (214) eines Objekts (10, 11, 12, 20) als den Unterschied zwischen dem gegenwärtigen Bild und dem Inbetriebnahmebild; und
Bestimmen (216) einer Identität des Objekts (10, 11, 12, 20);
**dadurch gekennzeichnet, dass** das Radarsystem (60) ein frequenzmoduliertes Dauerstrichradarsystem ist, wobei die Inbetriebnahme- (90) und die gegenwärtigen Radarsignale frequenzmodulierte Dauerstrichradarsignale sind und der Radarsendeempfänger dazu konfiguriert ist, frequenzmodulierte Dauerstrichradarsignale zu übertragen und zu empfangen; und
dadurch, dass das Bestimmen (216) einer Identität des Objekts (10, 11, 12, 20) Identifizieren umfasst, ob das Objekt ein belebtes Objekt oder ein unbelebtes Objekt ist;
wobei das Identifizieren, ob das Objekt (10, 11, 12, 20) ein belebtes Objekt oder ein unbelebtes Objekt ist, Bestimmen umfasst, ob das Objekt atmet; und
wobei das Bestimmen, ob das Objekt atmet, Folgendes umfasst:
Detektieren von Bewegungen des Objekts unter Verwendung der gegenwärtigen frequenzmodulierten Dauerstrichradarsignale;
Bestimmen, dass die Bewegungen periodisch sind und eine erste Frequenz aufweisen; und
Bestimmen, dass die erste Frequenz innerhalb eines Bereichs von Atemfrequenzen liegt.

7. Radarsystem (60) nach Anspruch 6, wobei das Bestimmen einer Identität des Objekts (10, 11, 12, 20) ferner Folgendes umfasst:
Bestimmen, dass die erste Frequenz innerhalb eines Bereichs menschlicher Atemfrequenzen liegt; und
Identifizieren des Objekts als einen Menschen, wenn die erste Frequenz innerhalb des Bereichs menschlicher Atemfrequenzen liegt.

8. Radarsystem (60) nach Anspruch 6 oder 7, wobei das Bestimmen einer Identität des Objekts (10, 11, 12, 20) ferner Folgendes umfasst:
Bestimmen, dass die erste Frequenz innerhalb eines Bereichs tierischer Atemfrequenzen liegt; und
Identifizieren des Objekts als ein Tier, wenn die erste Frequenz innerhalb des Bereichs tierischer Atemfrequenzen liegt.

9. Radarsystem (60) nach einem der Ansprüche 6 bis 8, wobei das Identifizieren, ob das Objekt (10, 11, 12, 20) ein belebtes Objekt oder ein unbelebtes Objekt ist, ferner Folgendes umfasst:
Detektieren von Bewegungen des Objekts unter Verwendung der gegenwärtigen frequenzmodulierten Dauerstrichradarsignale; und Identifizieren eines Gangbilds des Objekts; und
Bestimmen, dass das Objekt belebt ist, als Reaktion auf das Gangbild.

10. Radarsystem (60) nach Anspruch 9, wobei die Vorgänge ferner Folgendes umfassen:
Bestimmen einer Anzahl von Beinen des Objekts (10, 11, 12, 20) unter Verwendung der gegenwärtigen frequenzmodulierten Dauerstrichradarsignale.

11. Radarsystem (60) nach Anspruch 10, wobei die Vorgänge ferner Folgendes umfassen:
Identifizieren des Objekts als einen Menschen, wenn die Anzahl von Beinen zwei beträgt.

12. Radarsystem (60) nach Anspruch 10 oder 11, wobei die Vorgänge ferner Folgendes umfassen:
Identifizieren des Objekts als ein Tier, wenn die Anzahl von Beinen vier beträgt.

## Revendications

1. Procédé (200) de détection d'une présence d'un objet (10, 11, 12, 20), le procédé comprenant :
l'émission (204) de signaux radar de mise en service (90) dans toute une zone (18) à l'aide d'un émetteur-récepteur radar (80) d'un système radar (60) ;
le mappage (206) d'une image de mise en service de la zone (18) à l'aide des signaux radar de mise en service (90) ;
l'émission (208) de signaux radar actuels dans toute la zone (18) à l'aide de l'émetteur-récepteur radar (80) ;
le mappage (210) d'une image actuelle de la zone (18) à l'aide des signaux radar actuels ;
la détection (212) d'une différence entre l'image actuelle et l'image de mise en service ;
l'identification (214) d'un objet (10, 11, 12, 20) comme différence entre l'image actuelle et l'image de mise en service ; et
la détermination (216) d'une identité de l'objet (10, 11, 12, 20) ;
**caractérisé en ce que** les signaux radar de mise en service (90) et actuels sont des signaux radar à ondes continues modulés en fréquence, et le système radar (60) est un système radar à ondes continues modulé en fréquence ; et
**en ce que** la détermination (216) d'une identité de l'objet (10, 11, 12, 20) comprend le fait d'identifier si l'objet est un objet animé ou un objet inanimé ;
dans lequel le fait d'identifier si l'objet (10, 11, 12, 20) est un objet animé ou un objet inanimé comprend le fait de déterminer si l'objet respire ; et
dans lequel le fait de déterminer si l'objet respire comprend :
la détection de mouvements de l'objet à l'aide des signaux radar à ondes continues modulés en fréquence actuels ;
le fait de déterminer que les mouvements sont périodiques et ont une première fréquence ; et
le fait de déterminer que la première fréquence se situe dans une plage de fréquences respiratoires.

2. Procédé (200) selon la revendication 1, dans lequel la détermination (216) d'une identité de l'objet (10, 11, 12, 20) comprend en outre :
le fait de déterminer que la première fréquence se situe dans une plage de fréquences respiratoires humaines ; et
l'identification de l'objet comme étant un humain lorsque la première fréquence se situe dans la plage de fréquences respiratoires humaines.

3. Procédé (200) selon la revendication 1 ou 2, dans lequel la détermination (216) d'une identité de l'objet (10, 11, 12, 20) comprend en outre :
le fait de déterminer que la première fréquence se situe dans une plage de fréquences respiratoires animales ; et
l'identification de l'objet comme étant un animal lorsque la première fréquence se situe dans la plage de fréquences respiratoires animales.

4. Procédé (200) selon une quelconque revendication précédente, dans lequel le fait d'identifier si l'objet (10, 11, 12, 20) est un objet animé ou un objet inanimé comprend en outre :
la détection de mouvements de l'objet à l'aide des signaux radar à ondes continues modulés en fréquence actuels ; et
l'identification d'une démarche de l'objet ; et
le fait de déterminer que l'objet est animé en réponse à la démarche.

5. Procédé (200) selon la revendication 4, comprenant en outre :
la détermination d'un certain nombre de pattes de l'objet (10, 11, 12, 20) à l'aide des signaux radar à ondes continues modulés en fréquence actuels ; et
comprenant de préférence en outre :
l'identification de l'objet comme étant un humain lorsque le nombre de pattes est de deux et/ou l'identification de l'objet comme étant un animal lorsque le nombre de pattes est de quatre.

6. Système radar (60) comprenant :
un émetteur-récepteur radar (80) ;
un processeur (72) ;
une mémoire (74) comprenant des instructions exécutables par ordinateur qui, lorsqu'elles sont exécutées par le processeur,
amènent le processeur à réaliser des opérations, les opérations comprenant :
l'émission (204) de signaux radar de mise en service (90) dans toute une zone (18) à l'aide de l'émetteur-récepteur radar (80) ;
le mappage (206) d'une image de mise en service de la zone (18) à l'aide des signaux radar de mise en service (90) ;
l'émission (208) de signaux radar actuels dans toute la zone (18) à l'aide de l'émetteur-récepteur radar (80) ;
le mappage (210) d'une image actuelle de la zone (18) à l'aide des signaux radar actuels ;
la détection (212) d'une différence entre l'image actuelle et l'image de mise en service ;
l'identification (214) d'un objet (10, 11, 12, 20) comme différence entre l'image actuelle et l'image de mise en service ; et
la détermination (216) d'une identité de l'objet (10, 11, 12, 20) ;
**caractérisé en ce que** le système radar (60) est un système radar à ondes continues modulé en fréquence, les signaux radar de mise en service (90) et actuels sont des signaux radar à ondes continues modulés en fréquence, et l'émetteur-récepteur radar est configuré pour émettre et recevoir des signaux radar à ondes continues modulés en fréquence ; et
**en ce que** la détermination (216) d'une identité de l'objet (10, 11, 12, 20) comprend le fait d'identifier si l'objet est un objet animé ou un objet inanimé ;
dans lequel le fait d'identifier si l'objet (10, 11, 12, 20) est un objet animé ou un objet inanimé comprend le fait de déterminer si l'objet respire ; et
dans lequel le fait de déterminer si l'objet respire comprend :
la détection de mouvements de l'objet à l'aide des signaux radar à ondes continues modulés en fréquence actuels ;
le fait de déterminer que les mouvements sont périodiques et ont une première fréquence ; et
le fait de déterminer que la première fréquence se situe dans une plage de fréquences respiratoires.

7. Système radar (60) selon la revendication 6, dans lequel la détermination d'une identité de l'objet (10, 11, 12, 20) comprend en outre :
le fait de déterminer que la première fréquence se situe dans une plage de fréquences respiratoires humaines ; et
l'identification de l'objet comme étant un humain lorsque la première fréquence se situe dans la plage de fréquences respiratoires humaines.

8. Système radar (60) selon la revendication 6 ou 7, dans lequel la détermination d'une identité de l'objet (10, 11, 12, 20) comprend en outre :
le fait de déterminer que la première fréquence se situe dans une plage de fréquences respiratoires animales ; et
l'identification de l'objet comme étant un animal lorsque la première fréquence se situe dans la plage de fréquences respiratoires animales.

9. Système radar (60) selon l'une quelconque des revendications 6 à 8, dans lequel le fait d'identifier si l'objet (10, 11, 12, 20) est un objet animé ou un objet inanimé comprend en outre :
la détection de mouvements de l'objet à l'aide des signaux radar à ondes continues modulés en fréquence actuels ; et
l'identification d'une démarche de l'objet ; et
le fait de déterminer que l'objet est animé en réponse à la démarche.

10. Système radar (60) selon la revendication 9, dans lequel les opérations comprennent en outre :
la détermination d'un certain nombre de pattes de l'objet (10, 11, 12, 20) à l'aide des signaux radar à ondes continues modulés en fréquence actuels.

11. Système radar (60) selon la revendication 10, dans lequel les opérations comprennent en outre :
l'identification de l'objet comme étant un humain lorsque le nombre de pattes est de deux.

12. Système radar (60) selon la revendication 10 ou 11, dans lequel les opérations comprennent en outre :
l'identification de l'objet comme étant un animal lorsque le nombre de pattes est de quatre.
